# EUROPEAN PATENT APPLICATION

(11) **EP 4 456 165 A1**
(43) Date of publication of application: **30.10.2024**
(21) Application number: 22910708.1
(22) Date of filing: 21.11.2022
(51) Int. Cl.: H01M 4/13, H01M 4/62

(54) **NEGATIVE ELECTRODE FOR NONAQUEOUS ELECTROLYTE SECONDARY BATTERIES, AND NONAQUEOUS ELECTROLYTE SECONDARY BATTERY**

(30) Priority: 24.12.2021 JP 2021211191
(71) Applicant: Panasonic Intellectual Property Management Co., Ltd., Osaka-shi, Osaka 540-6207 (JP)
(72) Inventor: WATABE, Nanami, Kadoma-shi, Osaka 571-0057 (JP); DEGUCHI, Masaki, Kadoma-shi, Osaka 571-0057 (JP); NIINA, Fumiharu, Kadoma-shi, Osaka 571-0057 (JP); ZHONG, Yuanlong, Kadoma-shi, Osaka 571-0057 (JP)
(74) Representative: Eisenführ Speiser
(86) International application number: PCT/JP2022/042946
(87) International publication number: WO 2023/119990

(57) **Abstract**

The present invention provides a positive electrode active material which has improved capacity retention rate at room temperature. A negative electrode contained in a nonaqueous electrolyte secondary battery according to the present invention contains a negative electrode active material and a lithium sulfonate salt represented by general formula (I); and the particle diameter of the lithium sulfonate salt is 1 nm to 1,000 nm. (In the formula, R presents an n-valent aliphatic hydrocarbon group having 1 to 5 carbon atoms; and n represents 1 or 2.)

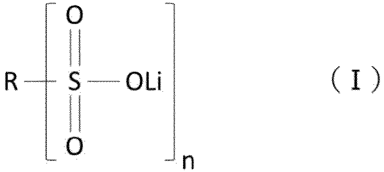

## Description

### TECHNICAL FIELD

The present disclosure relates to a negative electrode for a non-aqueous electrolyte secondary battery and a non-aqueous electrolyte secondary battery.

### BACKGROUND ART

In recent years, non-aqueous electrolyte secondary batteries have been widely used as a power source for an electric vehicle, a power storage device for utilizing natural energy, and the like. Properties required for a negative electrode used for the non-aqueous electrolyte secondary battery have also varied depending on the use. For example, Patent Literature 1 discloses a non-aqueous electrolyte secondary battery in which a negative electrode includes a lithium sulfonate salt such as lithium methanesulfonate, and describes that this non-aqueous electrolyte secondary battery has excellent cycle characteristics at high temperature and storage characteristics.

### CITATION LIST

### PATENT LITERATURE

PATENT LITERATURE 1: International Publication No. 2014/119375

### SUMMARY

However, the art in Patent Literature 1 uses N-methyl-2-pyrrolidone (NMP) as a dispersion medium in producing a negative electrode slurry, and thereby the lithium sulfonate salt included in the negative electrode has a large particle diameter. Accordingly, a dense solid electrolyte interphase (SEI) coating cannot be formed on a surface of the negative electrode, and a capacity retention at normal temperature cannot be improved. The art in Patent Literature 1 does not consider the capacity retention at normal temperature, and still has room for improvement.

It is an advantage of the present disclosure to provide a negative electrode having an improved capacity retention at normal temperature.

A negative electrode for a non-aqueous electrolyte secondary battery of an aspect of the present disclosure includes: a negative electrode active material; and a lithium sulfonate salt represented by the general formula (I), wherein the lithium sulfonate salt has a particle diameter of greater than or equal to 1 nm and less than or equal to 1000 nm, 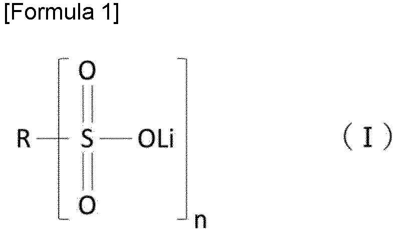 wherein R represents an n-valent aliphatic hydrocarbon group having greater than or equal to 1 and less than or equal to 5 carbon atoms, and n represents 1 or 2.

A non-aqueous electrolyte secondary battery of an aspect of the present disclosure comprises: the above negative electrode for a non-aqueous electrolyte secondary battery; a positive electrode; and a non-aqueous electrolyte.

According to the negative electrode for a non-aqueous electrolyte secondary battery of an aspect of the present disclosure, the non-aqueous electrolyte secondary battery having an improved capacity retention at normal temperature can be provided.

### BRIEF DESCRIPTION OF DRAWING

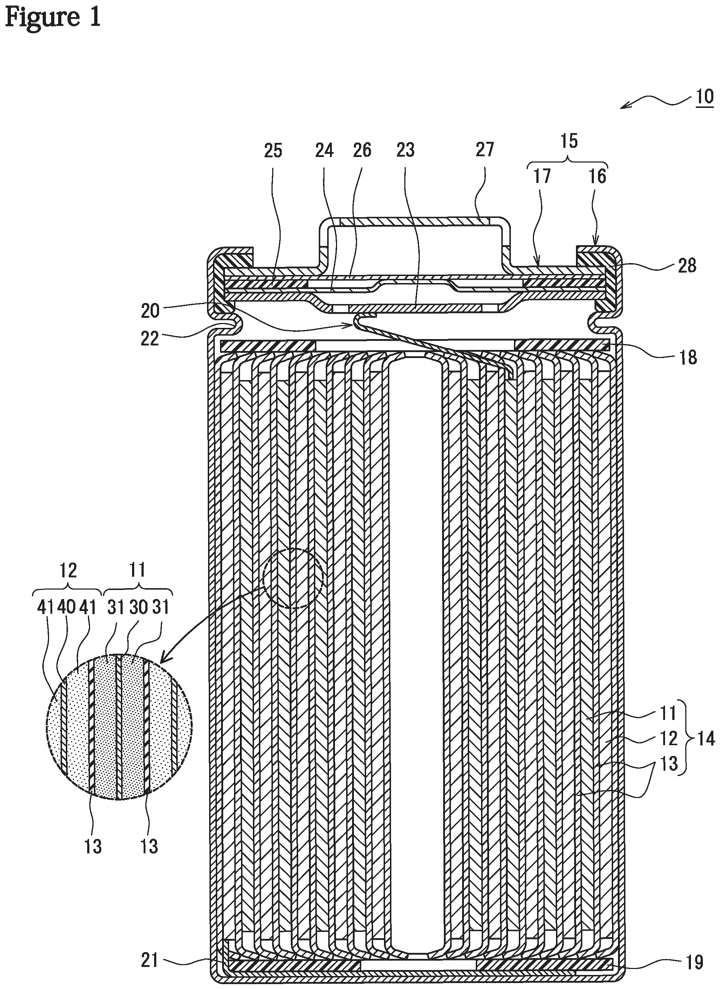

FIG. 1 is a vertical sectional view of a non-aqueous electrolyte secondary battery of an example of an embodiment.

### DESCRIPTION OF EMBODIMENTS

On a surface of a negative electrode, an SEI coating is formed due to charge and discharge of a non-aqueous electrolyte secondary battery. It is commonly known that the structure of the SEI coating significantly affects characteristics of the battery, and it is considered that a dense SEI coating is preferable for improving performance of the battery. As disclosed in Patent Literature 1, adding a lithium sulfonate salt to a negative electrode is investigated in order to produce favorable SEI coating. However, the present inventors have made intensive investigation, and consequently found that the above conventional art does not improve a capacity retention at normal temperature. The lithium sulfonate salt is insoluble in a non-aqueous solvent and thereby the lithium sulfonate salt is just dispersed in the solvent, and it is presumed that the particle diameter of the lithium sulfonate salt becomes large, leading to failure of formation of dense SEI coating on the surface of the negative electrode.

Accordingly, the present inventors have made further investigation, and found that the capacity retention at normal temperature is improved by incorporating a lithium sulfonate salt having a predetermined particle diameter and represented by the following general formula (I) in a negative electrode, 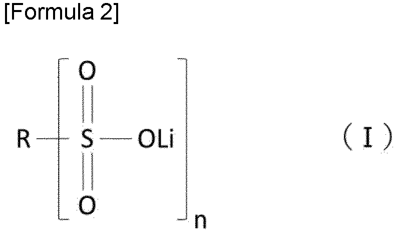 wherein R represents an n-valent aliphatic hydrocarbon group having greater than or equal to 1 and less than or equal to 5 carbon atoms, and n represents 1 or 2.

Hereinafter, an example of an embodiment of the non-aqueous electrolyte secondary battery according to the present disclosure will be described in detail. Hereinafter, a cylindrical battery housing a wound electrode assembly in a cylindrical exterior will be exemplified, but the electrode assembly is not limited to the wound electrode assembly, and may be a stacked electrode assembly in which a plurality of positive electrodes and a plurality of negative electrodes are alternately stacked one by one via a separator. A shape of the exterior is not limited to the cylindrical exterior, and may be, for example, a rectangular shape, a coin shape, or the like, and may be a battery case composed of laminated sheets including a metal layer and a resin layer.

FIG. 1 is a vertical sectional view of a non-aqueous electrolyte secondary battery 10 of an example of an embodiment. As exemplified in FIG. 1, the non-aqueous electrolyte secondary battery 10 comprises an electrode assembly 14, a non-aqueous electrolyte (not illustrated), and a battery case 15 housing the electrode assembly 14 and the non-aqueous electrolyte. The electrode assembly 14 has a wound structure in which a positive electrode 11 and a negative electrode 12 are wound via a separator 13. The battery case 15 is composed of a bottomed cylindrical exterior housing can 16 and a sealing assembly 17 sealing an opening of the exterior housing can 16.

The electrode assembly 14 is composed of the band-shaped positive electrode 11, the band-shaped negative electrode 12, two of the band-shaped separators 13, a positive electrode tab 20 bonded to the positive electrode 11, and a negative electrode tab 21 bonded to the negative electrode 12. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). The two separators 13 are formed to be one size larger than at least the positive electrode 11, and disposed to, for example, sandwich the positive electrode 11.

The non-aqueous electrolyte secondary battery 10 comprises insulating plates 18 and 19 disposed on the upper and lower sides of the electrode assembly 14, respectively. In the example illustrated in FIG. 1, the positive electrode tab 20 attached to the positive electrode 11 extends through a through hole in the insulating plate 18 toward a side of the sealing assembly 17, and the negative electrode tab 21 attached to the negative electrode 12 extends along an outside of the insulating plate 19 toward the bottom side of the exterior housing can 16. The positive electrode tab 20 is connected to a lower surface of a bottom plate 23 of the sealing assembly 17 by welding or the like, and a cap 27 of the sealing assembly 17 electrically connected to the bottom plate 23 becomes a positive electrode terminal. The negative electrode tab 21 is connected to a bottom inner surface of the exterior housing can 16 by welding or the like, and the exterior housing can 16 becomes a negative electrode terminal.

The exterior housing can 16 is, for example, a bottomed cylindrical metallic container. A gasket 28 is provided between the exterior housing can 16 and the sealing assembly 17 to seal the inside space of the battery case 15. The exterior housing can 16 has a grooved portion 22 that is formed by, for example, pressing a side wall thereof from the outside and that supports the sealing assembly 17. The grooved portion 22 is preferably formed in a circular shape along a circumferential direction of the exterior housing can 16, and supports the sealing assembly 17 with the upper surface thereof.

The sealing assembly 17 has a structure having the bottom plate 23, a lower vent member 24, an insulating member 25, an upper vent member 26, and the cap 27, which are stacked in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected to each other at respective central parts thereof, and the insulating member 25 is interposed between the respective circumferential parts. If the internal pressure of the battery increases due to abnormal heat generation, the lower vent member 24 is deformed so as to push the upper vent member 26 toward the cap 27 side and breaks, resulting in cutting off of an electrical pathway between the lower vent member 24 and the upper vent member 26. If the internal pressure further increases, the upper vent member 26 breaks, and gas is discharged through the opening of the cap 27.

Hereinafter, the positive electrode 11, the negative electrode 12, the separator 13, and the non-aqueous electrolyte, which constitute the non-aqueous electrolyte secondary battery 10, particularly the negative electrode 12, will be described in detail.

### [Positive Electrode]

The positive electrode 11 has, for example, a positive electrode current collector 30 and a positive electrode mixture layer 31 formed on a surface of the positive electrode current collector 30. The positive electrode mixture layer 31 is preferably formed on both surfaces of the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used. The positive electrode mixture layer 31 may include a positive electrode active material, a conductive agent, and a binder. The positive electrode 11 may be produced by, for example, applying a positive electrode slurry including the positive electrode active material, the conductive agent, the binder, and the like on the surface of the positive electrode current collector 30, drying and subsequently rolling the coating film to form the positive electrode mixture layer 31 on both surfaces of the positive electrode current collector 30.

The positive electrode active material included in the positive electrode mixture layer 31 includes, for example, a lithium-transition metal composite oxide. Examples of elements contained in the lithium-transition metal composite oxide other than Li include Ni, Co, Mn, Al, B, Mg, Ti, V, Cr, Fe, Cu, Zn, Ga, Sr, Zr, Nb, In, Sn, Ta, W, Si, and P. An example of a preferable lithium-transition metal composite oxide is a composite oxide containing at least one of Ni, Co, and Mn. Specific examples thereof include: a lithium-transition metal composite oxide containing Ni, Co, and Mn; and a lithium-transition metal composite oxide containing Ni, Co, and Al.

Examples of the conductive agent included in the positive electrode mixture layer 31 may include a carbon-based material such as carbon black (CB), acetylene black (AB), Ketjenblack, carbon nanotube (CNT), graphene, and graphite. These materials may be used singly, or may be used in combination of two or more thereof.

Examples of the binder included in the positive electrode mixture layer 31 may include a fluorine-based resin such as polytetrafluoroethylene (PTFE) and polyvinylidene fluoride (PVDF), polyacrylonitrile (PAN), a polyimide resin, an acrylic resin, and a polyolefin resin. These materials may be used singly, or may be used in combination of two or more thereof.

### [Negative Electrode]

The negative electrode 12 has, for example, a negative electrode current collector 40 and a negative electrode mixture layer 41 formed on a surface of the negative electrode current collector 40. The negative electrode mixture layer 41 is preferably formed on both surfaces of the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode mixture layer 41 includes a negative electrode active material and a lithium sulfonate salt.

The negative electrode active material included in the negative electrode mixture layer 41 is not particularly limited as long as it can reversibly intercalate and deintercalate lithium ions, and a carbon material such as graphite is typically used. The graphite may be any of: a natural graphite such as flake graphite, massive graphite, and amorphous graphite; and an artificial graphite such as massive artificial graphite and graphitized mesophase-carbon microbead. As the negative electrode active material, a metal that forms an alloy with Li, such as Si or Sn, a metal compound including Si, Sn, or the like, a lithium-titanium composite oxide, or the like may be used. A material in which a carbon coating is provided on these materials may also be used. For example, a Si-containing compound represented by SiOₓ (0.5≤x≤1.6); or a Si-containing compound in which Si fine particles are dispersed in a lithium silicate phase represented by Li_{2y}SiO_{(2+y)} (0<y<2) may be used in combination with graphite.

The lithium sulfonate salt included in the negative electrode mixture layer 41 is represented by the following general formula (I). Here, an aliphatic hydrocarbon group means a group consisting of a carbon element and a hydrogen element. R is not particularly limited as long as it is an n-valent aliphatic hydrocarbon group having greater than or equal to 1 and less than or equal to 5 carbon atoms, and may include an unsaturated bond. If the number of the carbon atoms included in R is more than 5, the water solubility decreases, and a particle diameter of the lithium sulfonate salt becomes larger than a specific range described later.

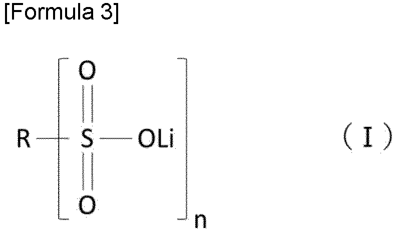

In the formula, R represents an n-valent aliphatic hydrocarbon group having greater than or equal to 1 and less than or equal to 5 carbon atoms, and n represents 1 or 2.

It is preferable that n represents 1, and R represents an alkyl group having greater than or equal to 1 and less than or equal to 5 carbon atoms. This configuration retains the water solubility of the lithium sulfonate salt. R more preferably represents any one selected from the group consisting of CH₃, C₂H₅, and C₃H₇. That is, the lithium sulfonate salt is preferably any one of the group consisting of lithium methanesulfonate, lithium ethanesulfonate, and lithium propanesulfonate.

The particle diameter of the lithium sulfonate salt is greater than or equal to 1 nm and less than or equal to 1000 nm, preferably greater than or equal to 1 nm and less than or equal to 500 nm, and more preferably greater than or equal to 10 nm and less than or equal to 200 nm. This configuration can form a dense SEI coating on the surface of the negative electrode 12. The particle diameter of the lithium sulfonate salt is determined by, for example, observing the lithium sulfonate salt present in a cross section of the negative electrode 12 with a scanning electron microscope (hereinafter, which may be referred to as SEM). Specifically, outer shapes of randomly selected 50 particles are specified, and a major diameter (the longest diameter) of each of the 50 particles is determined to specify an average value thereof as the particle diameter of the lithium sulfonate salt. The lithium sulfonate salt may also be identified by analyzing the composition by energy dispersive X-ray spectroscopy (EDX) in parallel to the observation with SEM.

An amount of the lithium sulfonate salt included in the negative electrode 12 is preferably greater than or equal to 0.001 mass% and less than or equal to 5 mass% based on a mass of the negative electrode active material. The amount of the lithium sulfonate salt within this range can remarkably improve the capacity retention at normal temperature. The amount of the lithium sulfonate salt is measured by, for example, inductively coupled plasma (ICP) atomic emission spectrometry. A position where the lithium sulfonate salt is present is not particularly limited. For example, the lithium sulfonate salt may be present on the surface of the negative electrode active material or between the negative electrode active materials in the negative electrode mixture layer 41, or may be present inside of the SEI coating or a surface thereof.

The negative electrode mixture layer 41 may further include a binder. Examples of the binder included in the negative electrode mixture layer 41 include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). These materials may be used singly, or may be used in combination of two or more thereof.

Next, an example of a method for manufacturing the negative electrode 12 will be described. The method for manufacturing the negative electrode 12 includes, for example: a step of preparing a negative electrode slurry; and a step of applying the negative electrode slurry on a surface of the negative electrode current collector 40 to form the negative electrode mixture layer 41.

First, the negative electrode slurry including the negative electrode active material, the lithium sulfonate salt, the binder, and the like is prepared by using water as a dispersion medium. The negative electrode slurry may also be prepared by dry-mixing the negative electrode active material and the lithium sulfonate salt, further mixing the binder with this mixture, and adding an appropriate amount of water. The negative electrode slurry may also be prepared by dissolving the lithium sulfonate salt in water in advance, and adding this solution to a mixture of the negative electrode active material and the binder. The method for preparing the negative electrode slurry is not limited to these examples.

The above negative electrode slurry is applied on the surface of the negative electrode current collector 40, and the coating film is dried and subsequently rolled to produce the negative electrode 12. The negative electrode slurry is preferably applied on both surfaces of the negative electrode current collector 40 to form the negative electrode mixture layer 41 on both surfaces of the negative electrode current collector 40.

Since being water-soluble, the lithium sulfonate salt is dissolved in the negative electrode slurry. Thereafter, by precipitation of the lithium sulfonate salt in drying of the coating film of the negative electrode slurry, the particle diameter of the lithium sulfonate salt included in the negative electrode 12 can be controlled to be within the range of greater than or equal to 1 nm and less than or equal to 1000 nm.

### [Separator]

For the separator 13, a porous sheet having an ion permeation property and an insulation property is used, for example. Specific examples of the porous sheet include a fine porous thin film, a woven fabric, and a nonwoven fabric. As a material for the separator, a polyolefin such as polyethylene or polypropylene, cellulose, or the like is preferable. The separator 13 may have a single-layered structure, or may have a stacked structure. On a surface of the separator 13, a resin layer having high heat resistance, such as an aramid resin, and a filler layer including a filler of an inorganic compound may be provided.

### [Non-Aqueous Electrolyte]

The non-aqueous electrolyte includes, for example, a non-aqueous solvent and an electrolyte salt dissolved in the non-aqueous solvent. For the non-aqueous solvent, esters, ethers, nitriles such as acetonitrile, amides such as dimethylformamide, a mixed solvent of two or more thereof, or the like may be used, for example. The non-aqueous solvents may contain a halogen-substituted derivative in which hydrogen in these solvents is at least partially replaced with a halogen atom such as fluorine. Examples of the halogen-substituted derivative include fluorinated cyclic carbonates such as fluoroethylene carbonate (FEC), fluorinated chain carbonates, and fluorinated chain carboxylates such as methyl fluoropropionate (FMP).

Examples of the esters include: cyclic carbonates such as ethylene carbonate (EC), propylene carbonate (PC), and butylene carbonate; chain carbonates such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylates such as γ-butyrolactone (GBL) and γ-valerolactone (GVL); and chain carboxylates such as methyl acetate, ethyl acetate, propyl acetate, methyl propionate (MP), and ethyl propionate (EP).

Examples of the ethers include: cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and a crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1<x<6, and n represents 1 or 2), LiB₁₀Cl₁₀, LiCI, LiBr, Lil, lithium chloroborane, a lithium lower aliphatic carboxylate, borate salts such as Li₂B₄O₇ and Li(B(C₂O₄)F₂), and imide salts such as LiN(SO₂CF₃)₂ and LiN(CiF₂ₗ₊₁SO₂)(CₘF₂ₘ₊₁SO₂) {l and m represent integers of 0 or more}. The lithium salt may be used singly, or a plurality of types thereof may be mixed for use. Among them, LiPF₆ is preferably used from the viewpoints of ion conductivity, electrochemical stability, and the like. A concentration of the lithium salt is, for example, greater than or equal to 0.8 mol and less than or equal to 1.8 mol per litter of the non-aqueous solvent. In addition, vinylene carbonate and a propanesultone-type additive may be further added.

### EXAMPLES

Hereinafter, the present disclosure will be further described with Examples and Comparative Examples, but the present disclosure is not limited to the following Examples.

### <Example 1>

### [Production of Positive Electrode]

As a positive electrode active material, a lithium-transition metal composite oxide represented by LiNi_{0.90}Co_{0.05}Al_{0.05}O₂ was used. Mixing of 98 parts by mass of the positive electrode active material, 1 part by mass of carbon nanotube (CNT), and 1 part by mass of polyvinylidene fluoride (PVDF) was performed, and N-methyl-2-pyrrolidone (NMP) was used as a dispersion medium to prepare a positive electrode slurry. Then, this positive electrode slurry was applied on both surfaces of a positive electrode current collector composed of aluminum foil, the coating film was dried, and subsequently the coating film was rolled with a roller. Thereafter, the resultant was cut to a predetermined electrode size to produce a positive electrode in which a positive electrode mixture layer was formed on both surfaces of the positive electrode current collector. On a part of the positive electrode, an exposed portion where the surface of the positive electrode current collector was exposed was provided.

### [Production of Negative Electrode]

Natural graphite and SiO were mixed at a mass ratio of 92:8, and this mixture was used as a negative electrode active material. The negative electrode active material, carboxymethylcellulose (CMC), a dispersion of styrene-butadiene rubber (SBR), and carbon nanotube (CNT) were mixed at a solid-content mass ratio of 100:1:1:0.05 to produce a mixture. Separately, lithium methanesulfonate (CH₃SO₃Li) at 0.55 mass% based on a mass of the negative electrode active material was dissolved in water as a dispersion medium, and this was added to the above mixture to prepare a negative electrode slurry. This negative electrode slurry was applied on both surfaces of a negative electrode current collector composed of copper foil, the coating film was dried, and subsequently the coating film was rolled with a roller. Thereafter, the resultant was cut to a predetermined electrode size to produce a negative electrode in which a negative electrode mixture layer was formed on both surfaces of the negative electrode current collector. On a part of the negative electrode, an exposed portion where the surface of the negative electrode current collector was exposed was provided.

### [Preparation of Electrolyte]

Ethylene carbonate (EC), ethyl methyl carbonate (EMC), and dimethyl carbonate (DMC) were mixed at a volume ratio of 20:5:75. Lithium hexafluorophosphate (LiPF₆) was dissolved in this mixed solvent at a concentration of 1 mol/L to prepare an electrolyte.

### [Production of Test Cell]

A positive electrode lead made of aluminum was attached to the exposed portion of the positive electrode, a negative electrode lead made of nickel was attached to the exposed portion of the negative electrode, the positive electrode and the negative electrode were spirally wound via a separator made of a polyolefin, and then press-formed in a radial direction to produce a flat, wound electrode assembly. This electrode assembly was housed in an exterior composed of an aluminum laminate sheet, the non-aqueous electrolyte liquid was injected thereinto, and then an opening of the exterior was sealed to obtain a test cell.

### [Evaluation of Cycle Characteristics]

Under an environment temperature of 25°C, the test cell was charged at a constant current of 0.3 C until 4.2 V, then charged at a constant voltage of 4.2 V until 0.02 C. Thereafter, the test cell was discharged at a constant current of 0.5 C until 2.5 V. This charge and discharge was specified as one cycle, and 100 cycles were performed to determine a capacity retention with the following formula. Capacity retention (%) = (Discharge capacity at 100th cycle/Discharge capacity at 1st cycle) × 100

### <Example 2>

A test cell was produced and evaluated in the same manner as in Example 1 except that, in the production of the negative electrode, the amount of the lithium methanesulfonate added based on the mass of the negative electrode active material was changed to 0.25 mass%.

### <Example 3>

A test cell was produced and evaluated in the same manner as in Example 1 except that, in the production of the negative electrode, the amount of the lithium methanesulfonate added based on the mass of the negative electrode active material was changed to 1 mass%.

### <Comparative Example 1>

A test cell was produced and evaluated in the same manner as in Example 1 except that, in the production of the negative electrode, lithium methanesulfonate was not added.

### <Comparative Example 2>

A test cell was produced and evaluated in the same manner as in Example 1 except that, in the production of the negative electrode: the negative electrode active material, PVDF, and CNT were mixed at a solid-content mass ratio of 100:1:0.05 to produce a mixture; lithium methanesulfonate at 0.55 mass% based on the mass of the negative electrode active material was separately dispersed in N-methyl-2-pyrrolidone (NMP) as a dispersion medium; and this was added to the above mixture to prepare a negative electrode slurry.

Table 1 shows the evaluation results of the test cells of Examples and Comparative Examples. Table 1 also shows the dispersion medium of the negative electrode slurry, and the type, the amount added, and the particle diameter of the lithium sulfonate salt.

**[Table 1]**

| | Slurry dispersion medium | Lithium sulfonate salt | | | Capacity retention [%] |
|---|---|---|---|---|---|
| | | Type | Amount added [mass%] | Particle diameter [nm] | |
| Example 1 | Water | CH₃SO₃Li | 0.55 | 100 | 97.3 |
| Example 2 | Water | CH₃SO₃Li | 0.25 | 90 | 97.3 |
| Example 3 | Water | CH₃SO₃Li | 1 | 105 | 97.3 |
| Comparative Example 1 | Water | - | 0 | - | 96.7 |
| Comparative Example 2 | NMP | CH₃SO₃Li | 0.55 | 1100 | 95.9 |

In Table 1, the test cells of Examples 1 to 3 had the improved capacity retention compared with the test cells of Comparative Examples 1 and 2. Therefore, it is found that the capacity retention of the non-aqueous electrolyte secondary battery at normal temperature is improved by using the negative electrode in which the lithium sulfonate salt having the specific particle diameter is present.

### REFERENCE SIGNS LIST

10 non-aqueous electrolyte secondary battery, 11 positive electrode, 12 negative electrode, 13 separator, 14 electrode assembly, 15 battery case, 16 exterior hosing can, 17 sealing assembly, 18, 19 insulating plate, 20 positive electrode tab, 21 negative electrode tab, 22 grooved portion, 23 bottom plate, 24 lower vent member, 25 insulating member, 26 upper vent member, 27 cap, 28 gasket, 30 positive electrode current collector, 31 positive electrode mixture layer, 40 negative electrode current collector, 41 negative electrode mixture layer

## Claims

1. A negative electrode for a non-aqueous electrolyte secondary battery, the negative electrode including:
a negative electrode active material; and
a lithium sulfonate salt represented by the general formula (I), wherein
the lithium sulfonate salt has a particle diameter of greater than or equal to 1 nm and less than or equal to 1000 nm, 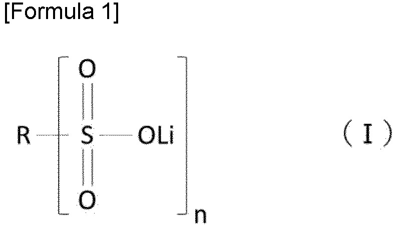
wherein R represents an n-valent aliphatic hydrocarbon group having greater than or equal to 1 and less than or equal to 5 carbon atoms, and n represents 1 or 2.

2. The negative electrode for a non-aqueous electrolyte secondary battery according to claim 1, wherein n represents 1, and R represents an alkyl group having greater than or equal to 1 and less than or equal to 5 carbon atoms.

3. The negative electrode for a non-aqueous electrolyte secondary battery according to claim 2, wherein R represents any one selected from the group consisting of CH₃, C₂H₅, and C₃H₇.

4. The negative electrode for a non-aqueous electrolyte secondary battery according to any one of claims 1 to 3, wherein an amount of the lithium sulfonate salt is greater than or equal to 0.001 mass% and less than or equal to 5 mass% based on a mass of the negative electrode active material.

5. The negative electrode for a non-aqueous electrolyte secondary battery according to any one of claims 1 to 4, wherein the lithium sulfonate salt has a particle diameter of greater than or equal to 10 nm and less than or equal to 200 nm.

6. A non-aqueous electrolyte secondary battery, comprising:
the negative electrode for a non-aqueous electrolyte secondary battery according to any one of claims 1 to 5;
a positive electrode; and
a non-aqueous electrolyte.
